# EUROPEAN PATENT APPLICATION

(11) **EP 0 822 136 A2**
(43) Date of publication of application: **04.02.1998**
(21) Application number: 97113392.1
(22) Date of filing: 04.08.1997
(51) Int. Cl.: B62M 23/02, B62M 7/04

(54) **Motive-force assisted bicycle**

(30) Priority: 02.08.1996 JP 204583/96; 30.05.1997 JP 142742/97
(71) Applicant: YAMAHA HATSUDOKI KABUSHIKI KAISHA, Iwata-shi Shizuoka-ken, 438 (JP)
(72) Inventor: Yamashita, Izumi, Iwata Shi, Shizuoka 438 (JP); Yokoyama, Yoshiharu, Iwata Shi, Shizuoka 438 (JP); Nagase, Takeshi, Iwata Shi, Shizuoka 438 (JP)
(74) Representative: Grünecker, Kinkeldey, Stockmair & Schwanhäusser Anwaltssozietät

(57) **Abstract**

A motive-force assisted bicycle comprises a pedal shaft (70) rotatable by a pedaling force from pedals (11), an assistant drive means (8) supported on a body frame (7), a force transmitting device (9) for combining and transmitting a force from said pedal shaft (70) with a force from said assistant drive meansto drive a resultant force shaft (86) which drives a wheel via a transmission means (12). Said force transmitting device and said resultant force shaft are provided at positions different to that of said pedal shaft.

## Description

The present invention relates to a motive-force assisted bicycle comprising a pedal shaft rotatable by a pedaling force from pedals, an assistant drive means supported on a body frame, a force transmitting device for combining and transmitting a force from said pedal shaft with a force from said assistant drive means to drive a resultant force shaft which drives a wheel via a transmission means.

Motive-force-assisted bicycle have been developed and put in practical use in which a driving system is configured to add an assistant force from an engine (internal combustion engine), motor (electric motor) or the like to a pedaling force from pedals.

A motive-force-assisted bicycle of this type includes a head pipe for rotatably supporting a handle shaft, a pedal shaft rotated by a pedaling force from pedals, an assistant drive means supported on a vehicle body frame, a force transmitting means for combining and transmitting a rotational force from said pedal shaft and a rotational force from the assistant drive means to rotate a resultant force shaft, and a transmission means for transmitting the rotation of said resultant force shaft to a rear wheel.

A conventional motive-force-assisted bicycle has had a configuration in which the force transmitting means is provided on the pedal shaft to transmit a rotational force from an assistant drive means such as an engine to the pedal shaft to thereby drive the rear wheel and in which the resultant force shaft is coaxial with the pedal shaft.

In such a driving system, when a motive force from an engine is combined with a pedaling force of a rider, the rotational force from the engine must be significantly decelerated temporarily in order to be matched with the speed of rotation provided by the rider. A configuration has been employed in which this significantly decelerated engine output is combined with the pedaling force from the pedals on the resultant force shaft and is accelerated to drive the rear wheel through a transmission means such as a chain.

However, such a conventional configuration of a driving system has suffered from poor efficiency in transmitting the rotation of the engine and a great loss because the rotation of the engine is significantly decelerated temporarily and is accelerated again to drive the rear wheel. In a configuration in which a rear wheel is driven by a resultant force shaft coaxial with a pedal shaft through a chain, since the position of the pedal shaft and the position of the wheel shaft of the rear wheel are at substantially the same height, the chain and chain stays or the like that constitute a support for the same are arranged in a substantially horizontal relationship, which has reduced the road clearance at the space between the pedal shaft and the rear wheel, resulting in a possibility of troubles when running on a rough road.

Accordingly, it is an objective of the present invention to provide an improved motive-force assisted bicycle as indicated above which facilitates the effective transmission of the rotation of an assistant drive means as well as the prevention of vibration by providing a compact structure.

According to the present invention, this objective is solved for a motive-force assisted bicycle as indicated above in that said force transmitting device and said resultant force shaft are provided at positions different to that of said pedal shaft.

In case the motive-force assisted bicycle is provided with a concentrically arranged pedal shaft and resultant force shaft, this objective is solved in that said force transmitting device includes a planetary acceleration mechanism provided between a manually rotated shaft and the resultant force shaft, the planetary acceleration mechanism comprises an outer wheel connected to said resultant force shaft, a sun wheel rotatably attached to said manually rotated shaft, a carrier secured to said manually rotated shaft, and a planetary wheel rotatably attached to said carrier in engagement with said outer wheel and sun wheel, the sun wheel is configured such that it can rotate against a spring in response to a torque reaction force which acts on said sun wheel, there is provided an output control means for controlling the output of said assistance drive means in accordance with the rotation of the sun wheel, the output control means includes an actuator for urging said spring in response to the rotation of said sun wheel to transmit the rotational force to the spring, there is provided a damper in a position facing said spring for damping the speed at which said actuator returns, said actuator is formed integrally with said sun wheel, and that there is provided an internal combustion engine or electric motor, an output shaft thereof being positioned in a plane including a longitudinal direction of the vehicle body.

According to an advantageous embodiment of the present invention according to the first alternative, it is possible that with respect to a ground the bicycle drives on the resultant force shaft is provided at a higher position than said pedal shaft and a wheel shaft of said driven wheel.

According to another preferred embodiment, it is advantageous when said assistant drive means is supported on said body frame in a substantially suspended state and in that the supporting position is above a line connecting a lower end of a head pipe and the pedal shaft when the vehicle body is viewed laterally.

An enhancement with respect to compactness is achievable when said force transmitting device includes a manually rotated shaft interposed between said pedal shaft and said resultant force shaft, and a first acceleration means provided between said pedal shaft and said manually rotated shaft for accelerating and the rotation of said pedal shaft transmitting it to the manually rotated shaft, and in that a second acceleration means is provided between said manually rotated shaft and said resultant force shaft for further accelerating the rotation of the manually rotated shaft and transmitting it to said resultant force shaft.

This may be further enhanced when said force transmitting device includes a planetary acceleration mechanism provided between the manually rotated shaft and the resultant force shaft, the planetary acceleration mechanism comprises an outer wheel connected to said resultant force shaft, a sun wheel rotatably attached to said manually rotated shaft, a carrier secured to said manually rotated shaft, and a planetary wheel rotatably attached to said carrier in engagement with said outer wheel and sun wheel.

In this connection, it is advantageous when the sun wheel is configured such that it can rotate against a spring in response to a torque reaction force which acts on said sun wheel, and that there is provided an output control means for controlling the output of said assistant drive means in accordance with the rotation of the sun wheel.

According to another preferred embodiment of the present invention, the output control means includes an actuator for urging said spring in response to the rotation of said sun wheel to transmit the rotational force to the spring, and that said actuator is integrally formed with said sun wheel.

In order to moderate the returning speed of this actuator, it is advantageous when there is provided a damper in a position facing said spring for damping the speed at which said actuator returns.

Other preferred embodiments of the present invention are laid down in further dependent claims.

Such a configuration in which a resultant force shaft is provided separately from a pedal shaft makes it possible to temporarily accelerate the rotation of the resultant force shaft relative to the rotation of the pedal shaft and to synthesize and accelerate them thereafter. As a result, the rotation of an engine can be efficiently synthesized with the rotation of the pedal shaft at an appropriate reduction ratio without significantly decelerating it as in the prior art and the resultant rotation can be smoothly transmitted to the rear wheel.

Further, since the resultant force shaft is provided in a position higher than the wheel shaft of the rear wheel, a system for transmitting a motive force from the resultant force shaft to the wheel shaft can be located in a higher position. For example, when the resultant force shaft is provided rearwardly of the pedal shaft, a mountain-like configuration is formed by the pedal shaft, resultant force shaft and the wheel shaft, and this increases road clearance between the pedal shaft and rear wheel to allow smooth running even on a rough road and the like. If chain stays that connect the resultant force shaft and the wheel shaft are provided, the height of the chain stays increases toward the front portion thereof, resulting in an increase in the road clearance at the area of the chain stays. Further, the assistant drive means or assistant motive force device may be provided ahead of the resultant force shaft so that the resultant force shaft and the assistance motive force device are arranged in parallel in the longitudinal direction above the pedal shaft to provide a well-balanced layout and a compact support structure.

A preferable mode of carrying out the invention is characterized in that said assistant motive force device is constituted by an engine or motor whose output shaft is disposed in a plane including the vehicle body in the longitudinal direction thereof.

Since the output shaft does not protrude in the direction of the width of the vehicle body in this configuration, a slim vehicle body structure is achieved and the frame structure is simplified.

A more preferable mode of carrying out the invention is characterized in that said assistant drive means is supported on said vehicle body frame in a substantially suspended state and in that the supporting position is higher than a line connecting a lower end of the head pipe and the pedal shaft when the vehicle body is viewed laterally.

By supporting the assistant drive means in a suspended state as described above, it is possible to reduce the dimension of the supporting portion in the direction of the width of the vehicle body and to arrange the frame in a higher position to increase the road clearance. In this case, since the center of inertia of the assistant motive force device is lower than the supporting portion, the center of inertia can be closer to a twisting axis of the vehicle body (a line connecting the lower end of the head pipe and the pedal shaft). Thus, the moment of the assistant drive means about the twisting axis can be reduced to improve the stability in traveling.

A more preferable mode of carrying out the invention is characterized in that an elastic meter is interposed at the position where said assistant motive force device is supported.

This allows the vibration of the assistant motive force device to be suppressed more effectively.

In the following, the present invention is explained in greater detail with respect to several embodiments thereof in conjunction with the accompanying drawings, wherein:
Fig. 1 is a side view of a motive-force-assisted bicycle according to an embodiment of the present invention.
Fig. 2 is a detailed view of an engine mount portion of the bicycle in Fig. 1.
Fig. 3 is a sectional view taken along the line A-A in Fig. 2.
Fig. 4 is a detailed view of a force synthesizer unit of the bicycle in Fig. 1.
Fig. 5 is a sectional view taken along the line B-B in Fig. 4.
Fig. 6 is a sectional view taken along the line C-C in Fig. 4.
Fig. 7 is a sectional view taken along the line D-D in Fig. 6.
Fig. 8 is a side view of major parts of another embodiment of the present invention.
Fig. 9 is a plan view of front frames of the embodiment in Fig. 8.
Fig. 10 is a plan view of seat stays of the embodiment in Fig. 8.
Fig. 11 is a plan view of chain stays of the embodiment in Fig. 8.
Fig. 12 is a sectional view of an engine mount portion of the embodiment in Fig. 8.
Fig. 13 is a plan view of a fuel tank retaining portion of the embodiment in Fig. 8.
Fig. 14 is a sectional view of a fuel tank retaining portion of the embodiment in Fig. 8.
Fig. 15 illustrates an internal structure of an engine unit of the embodiment in Fig. 8.
Fig. 16 illustrates a configuration of a jaw clutch of the embodiment in Fig. 8.
Fig. 17 illustrates a configuration of a damper for controlling the output of an assistant motive force according to the present invention.
Fig. 18 illustrates an operation of the damper according to the present invention.
Fig. 19 is a sectional view of the region of a force synthesizer unit of another embodiment of the present invention.
Fig. 20 is a side view of the embodiment in Fig. 19.
Fig. 21 is a side view of the region of a force synthesizer unit of still another embodiment of the present invention.

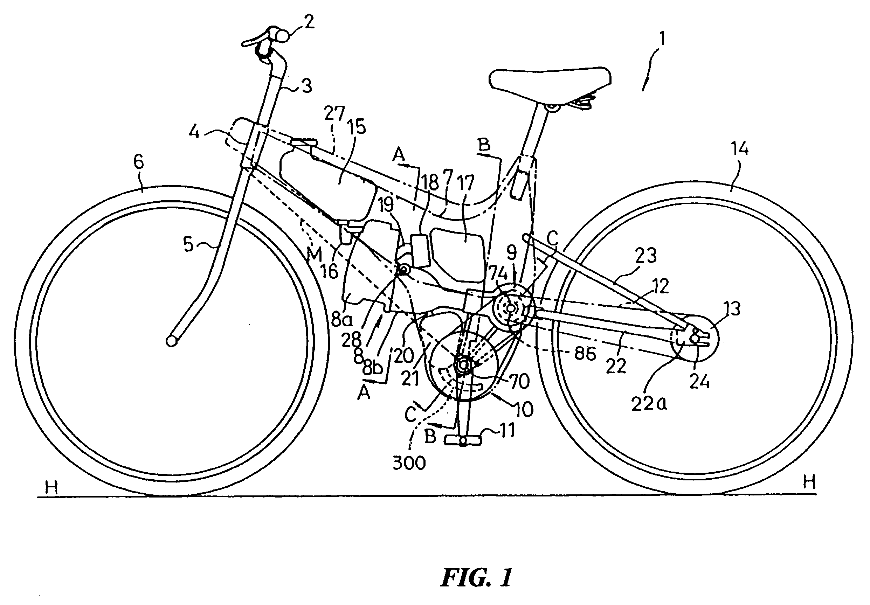

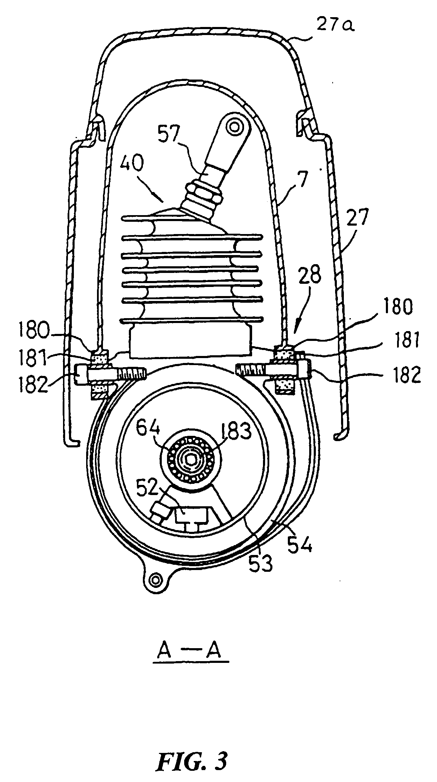

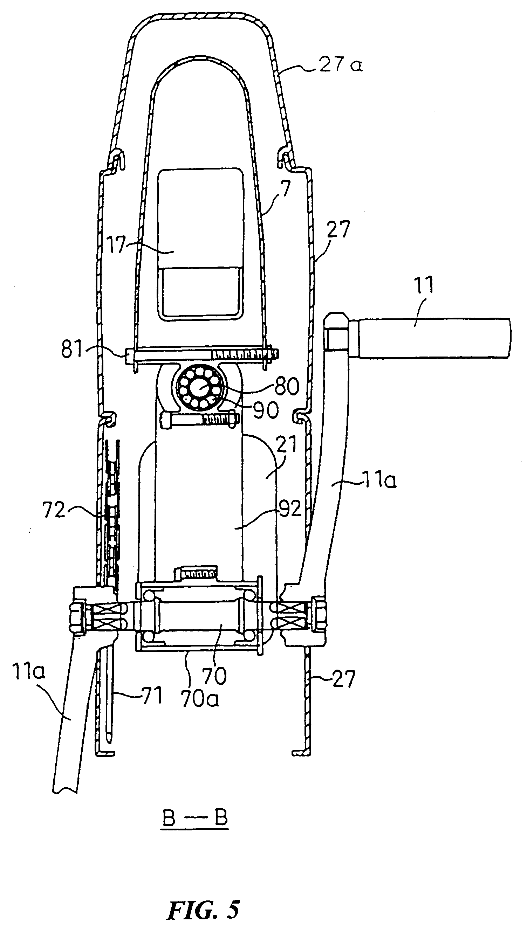

Fig. 1 is an overall side view of a motive-force-assisted bicycle according to the present invention. The motive-force-assisted bicycle 1 includes a head pipe 4 for rotatably supporting a handle shaft 3 which is rotated by a handle 2, and a front fork 5 is connected to the handle shaft 3 under the head pipe 4 to hold a front wheel 6. A vehicle body frame 7 made of a metal material is secured to the head pipe 4. As shown in Fig. 3 (a section taken along the line A-A) and Fig. 5 (a section taken along the line B-B), the vehicle body frame 7 has an inverted U-shaped configuration to cover the vehicle body on the left and right sides thereof. An assistant drive means or motive force unit 8 and a force transmitting means or synthesizer unit 9 are secured to this vehicle body frame 7. The assistant motive force unit 8 comprises an engine portion 8a and a transmission portion 8b, and the force synthesizer unit 9 is connected to a rear end of the transmission portion 8b. A manual force portion 10 is provided under the assistant motive force unit 8 and the force synthesizer unit 9. The manual force portion 10 includes a pedal shaft 70 which rotates in response to pedaling on pedals 11. As described later, a resultant force shaft 86 of the force synthesizer unit 9 is provided coaxially with a manually rotated shaft 74 which is accelerated by a pedaling force from the pedal shaft 70. The resultant force shaft 86 is provided in a position in the rear of the pedal shaft 70 and higher than a wheel shaft 24 of a rear wheel 14. The vehicle body frame 7 is entirely covered by a vehicle body cover 27 made of resin. The upper side of the vehicle body cover 27 is covered by a cover 27a which can be opened and closed as shown in Fig. 5 to be described later. The cover 27a is detachable.

The pedaling force from the manual force portion 10 and an engine driving force from the assistant motive force unit 8 are synthesized by the force synthesizer portion 9 as will be described later, and the resultant force drives a sprocket 13 of the rear wheel 14 for rotation via a chain 12 through the resultant force shaft 86.

A fuel tank 15 is provided in a frontal portion inside the vehicle body frame 7, and a fuel cock 16 is provided thereunder to deliver the fuel to a carburetor 18. An air cleaner 17 is provided above the assistant motive force unit 8 inside the vehicle body frame 7 in the middle of the vehicle body to deliver a mixed gas to the engine portion 8a through the carburetor 18 and an intake pipe 19. Exhaust gas from the engine portion 8a is delivered to a muffler 21 through an exhaust pipe 20 and is discharged to the outside through a tail pipe 300.

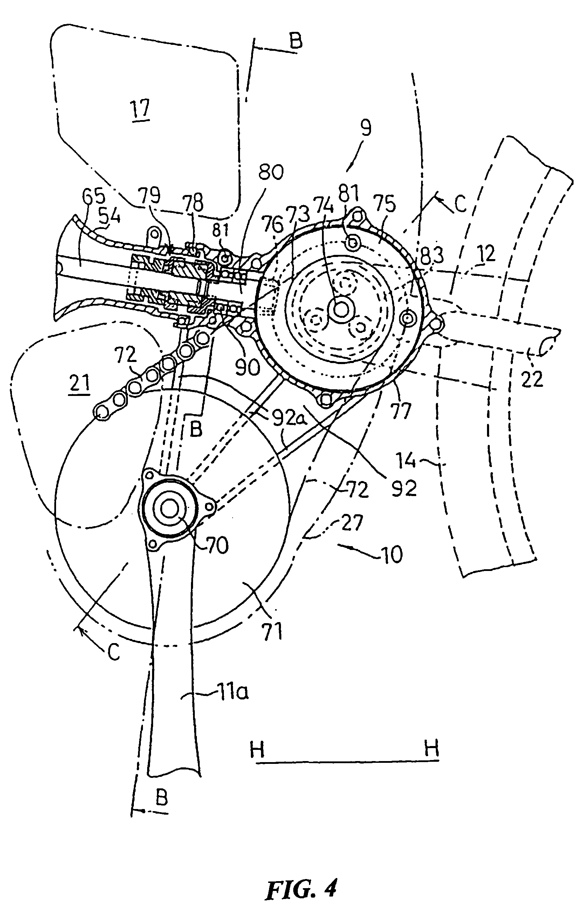

A pair of left and right chain stays 22 are provided in positions to connect the wheel shaft 24 of the rear wheel 14 and the resultant force shaft 86 of the force synthesizer unit 9. Brackets 22a are welded to the rear ends of the chain stays 22, and the rear shaft 24 of the rear wheel is supported by the brackets 22a. The front ends of the chain stays 22 are secured to a casing 77 of the force synthesizer unit 9 (see Fig. 4 to be described later) with bolts. Since the resultant force shaft 86 is in a position higher than the wheel shaft 24 of the rear wheel, the chain stays are arranged such that their height increases toward the front portions thereof. Thus, the road clearance at the area of the chain stays is increased.

The rear ends of a pair of left and right seat stays 23 are further secured to the brackets 22a of the chain stays 22. The front ends of the seat stays 23 are secured to the vehicle body frame 7 with bolts. Thus, a triangular frame is formed by the vehicle body frame 7 with the force synthesizer unit 9 secured thereto, the chain stays 22 and the seat stays 23 to provide a supporting frame for the rear wheel which exhibits high strength with a compact configuration. In this case, the front ends of the chain stays 22 and the seat stays 23 may be connected to each other by another stay to enhance the strength further. A configuration may be employed in which springs are interposed between the ends of the seat stays 23 and the frame 7 to absorb vibration from the rear wheel.

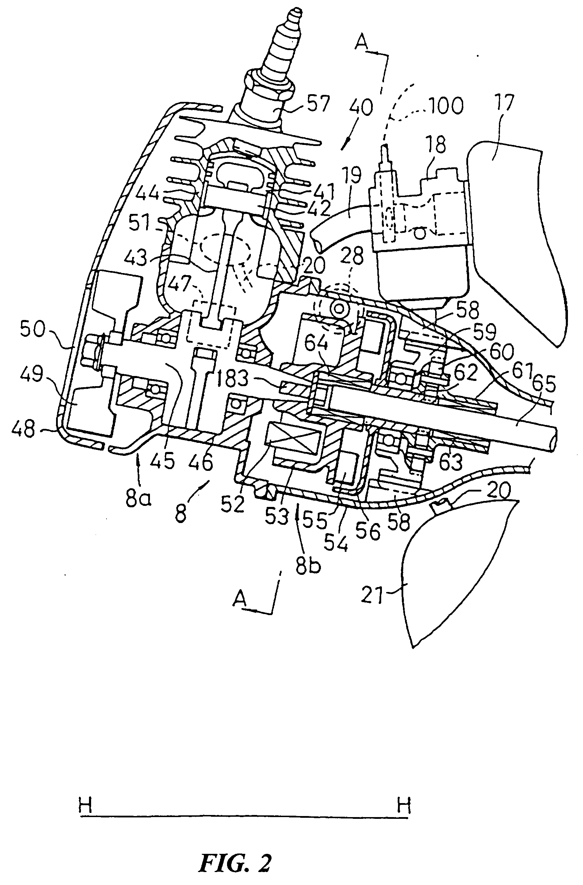

Fig. 2 is a detailed view showing an internal structure of the assistant motive force unit 8 in Fig. 1. The engine portion 8a includes an engine 40 which is covered by an engine cover 48 at the front side thereof. The engine 40 includes a piston 41 which slides in a cylinder block 44, and the piston 41 is connected to a crank shaft 45 through a piston pin 42 and a connecting rod 43. The rotational axis of the crank shaft 45 is arranged in a substantially parallel relationship with the central axis of the vehicle body in the longitudinal direction thereof. This allows the dimension in the direction of vehicle width to be reduced for a slim configuration.

A crank case 46 is secured to the lower side of the cylinder block 44 such that it covers the crank shaft 45 using bolts or the like which are not shown to form a crank chamber. The intake pipe 19 from the carburetor 18 is connected to the crank chamber, and a reed valve 47 is provided at the intake port thereof. An opening 50 is formed on the engine cover 48, and a fan 49 for air-cooling is attached to the end of the crank shaft 45 in a face-to-face relationship with the opening 50. An exhaust gas outlet portion 51 is opened on the cylinder block 44 in communication with an exhaust pipe 20. 57 designates an ignition plug.

The transmission portion 8b includes a transmission shaft 65 for transmitting the rotation of the crank shaft 45 of the engine which is coaxial with the crank shaft 45. A fly-wheel magneto 53 is secured to an end of the crank shaft 45 of the engine with a bolt 183. The transmission portion 8b is covered by a transmission cover 54 which contains the fly-wheel magneto 53 therein. A coil 52 is provided inside the fly-wheel magneto 53. A shoe 55 which constitutes a centrifugal clutch is provided close to the outer surface of the fly-wheel magneto 53. When a certain speed of rotation is exceeded, it is expanded and urged into contact with a drum 56 to connect the clutch. The inner surface of the transmission case 54 is formed with irregularities 58 which engage an outer circumferential portion of a ring gear 59. Thus, the ring gear 59 is maintained in a secured state. A sun gear 62 is mounted inside the ring gear 59. The sun gear 62 is secured integrally with the drum 56 and is rotatable relative to the transmission shaft 65. A planetary gear 60 is engaged between the sun gear 62 and the ring gear 59. The planetary gear 60 is attached to a carrier 61 which is in turn attached on to the transmission shaft 65 through a one-way clutch 63.

When the speed of rotation of the crank shaft 45 becomes equal to or exceeds a predetermined value, the centrifugal clutch is connected to rotate the drum 56, which results in rotation of the sun gear 62. As a result, the planetary gear 60 rotates to rotate the transmission shaft 65 through the one-way clutch 63. Such a planetary gear mechanism constitutes a deceleration mechanism which decelerates the rotation of the engine 40 and transmits it to the transmission shaft 65.

Another one-way clutch 64 is interposed between the fly-wheel magneto 53 and the transmission shaft 65. The one-way clutch 64 operates in the direction of transmitting the rotation of the transmission shaft 65 to the engine and does not transmit the rotation of the engine to the transmission shaft 65. The one-way clutch 64 is for starting the engine by transmitting manual rotation to the engine when a rotational force is produced by pedaling the pedals with a jaw clutch (79 in Fig. 4) provided on the rear end of the transmission shaft 65 in a connected state. During a normal operation after the engine is started, the rotation of the engine is therefore not transmitted through the one-way clutch 64, and the rotation of the engine which has been decelerated by the above-described centrifugal clutch and the planetary gear mechanism is transmitted to the transmission shaft 65 through the above-described one-way clutch 63.

When the engine is started, since the one-way clutch 63 is interposed on the transmission shaft 65, the rotation of pedals is not transmitted from the transmission gear 65 to the planetary mechanism consisting of the carrier 61, planetary gear 60, sun gear 62 and the like and the drum 56. Therefore, the pedaling force from the transmission shaft 65 is effectively used for the rotation of the crank shaft through the one-way clutch 64 to allow the engine to be started with a small pedaling force. The jaw clutch is in the connected state even during a travel using an assisting force.

Meanwhile, to travel using only the manual force with the assistant force from the engine stopped, the jaw clutch is placed in an off position to disconnect the force synthesizer unit 9 and the assistant motive force unit 8 and to disconnect the pedal shaft 70 and the resultant force shaft 86 from the transmission shaft 65 connected to the engine.

As described later, the assistant force unit 8 as described above is supported on the vehicle body frame 7 (Fig. 1) through rubber mounts 28 in a substantially suspended state.

Fig. 3 is a sectional view taken along the line A-A in Fig. 2. The outside of the inverted U-shaped vehicle frame 7 is covered by the vehicle body cover 27. The transmission case 54 is supported at two locations on both sides of an upper part thereof using bolts 182 in a substantially suspended state through support rings 180 provided on the vehicle body frame 7 and the rubber mounts 28 constituted by elastic materials 181 such as rubber. 183 designates a bolt coupling the above-described crank shaft and fly-wheel magneto 53, and 64 designates the one-way clutch for transmitting manual rotation at starting. By suspending the assistant force unit through the rubber mounts 28, the engine can be reliably supported while preventing vibration without increasing the dimension in the direction of the width of the vehicle.

Further, the position of the rubber mounts 28 is higher than a twisting axis M of the vehicle body (a line connecting the lower end of the head pipe 4 and the pedal shaft 70). The twisting axis M is a central axis about which the vehicle body is twisted by an interaction between the forces from the handle and the pedals when running using the pedals. The center of inertia of the assistant force unit 8 is thus lower than the suspending position and therefore can be closer to the above-mentioned twisting axis M. As a result, the moment of the assistant motive force device about the twisting axis M can be reduced to improve stability during accelerated traveling and when the pedals are strongly kicked.

### [0029]

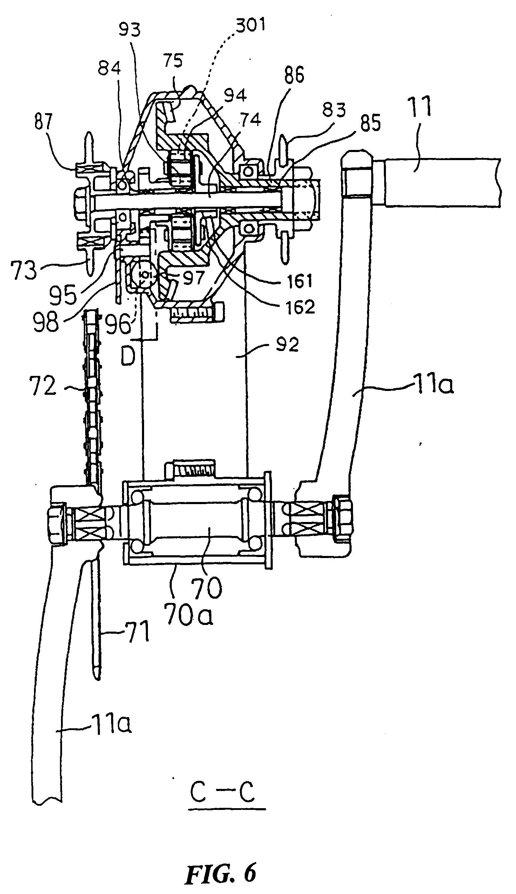

Fig. 4 is a detailed view of the force synthesizer portion (force synthesizer unit) 9 in Fig. 1. Figs. 5 and 6 are sections taken along the lines B-B and C-C in the same. The force synthesizer portion 9 is entirely covered by the casing 77. The rear end of the transmission case 54 of the above-described transmission portion 8b is attached to the front end of the casing 77 through an elastic ring 78. The casing 77 is secured to the vehicle body frame 7 at two locations in an upper part thereof using bolts 81. A rib plate 92 having three ribs 92a is formed from an aluminum casting between the casing 77 and a housing 70a (Figs. 5 and 6) of the pedal shaft 70 to be integral therewith.

The pedals 11 (Fig. 1) are connected to the pedal shaft 70 through cranks 11a. A sprocket 71 having a large diameter is attached to the pedal shaft 70. A sprocket 73 having a smaller diameter is attached to the manually rotated shaft 74 of the force synthesizer portion 9 (Fig. 6). The sprockets 71 and 73 are connected by a chain 72. Thus, rotation caused by a pedaling force is accelerated and transmitted to the manually rotated shaft 74.

The transmission shaft 65 of the above-described transmission portion 8b is connected to a transmission shaft 80 of the force synthesizer portion 9 through the jaw clutch 79. A bevel gear 76 is provided on the rear end of the transmission shaft 80 and is engaged with a bevel ring gear 75 attached to the manually rotated shaft 74.

As shown in the C-C section in Fig. 6, the above-described sprocket 73 for transmitting a pedaling force is attached to the rotating shaft (manually rotated shaft) 74 and, in addition, a sun gear 93 that forms a part of a planetary acceleration mechanism is attached thereto through a roller bearing 84. The sun gear 93 rotates with some clearance relative to the rotating shaft 74 and is in a position fixed by a spring to be described later relative to the casing.

A one-way clutch 87 is attached to a hub portion of the sprocket 73 to transmit only the forward rotation of the pedals and not to transmit the reverse rotation by idling it.

The above-described bevel ring gear 75 is attached to the manually rotated shaft 74 through a roller bearing 85, and rotation from the engine is transmitted to this bevel ring gear 75 through the bevel gear 76 (Fig. 4) after being decelerated. The portion of the bevel ring gear 75 attached to the manually rotated shaft 74 constitutes the resultant force shaft 86. A ring gear 301 is provided inside the bevel ring gear 75, a planetary gear 94 supported by a carrier 161 secured to the manually rotated shaft 74 by a serration 162 is engaged between the ring gear 301 and the sun gear 93. The rotation of the pedal shaft is further accelerated by a planetary acceleration mechanism having such a configuration and is transmitted to the resultant force shaft 86. Thus, a rotational force obtained by synthesizing the rotational forces resulting from the engine and the pedaling force causes the resultant force shaft 86 at the rear end of the bevel ring gear 75 to rotate, thereby rotating the sprocket 83 attached to the resultant force shaft 86. This rotation caused by the resultant force is decelerated and transmitted to the rear wheel 14 through the sprockets 83 and the chain 12 (Figs. 1 and 4).

As described above, the rotation of the engine is decelerated by the planetary mechanism, decelerated by the bevel gear, and further decelerated and transmitted by the chain to the rear wheel. Further, a pedaling force from the pedals is accelerated and transmitted from the pedal shaft 70 to the manually rotated shaft 74, further accelerated and synthesized with a driving force from the engine by the planetary acceleration mechanism and decelerated and transmitted by the chain to the rear wheel.

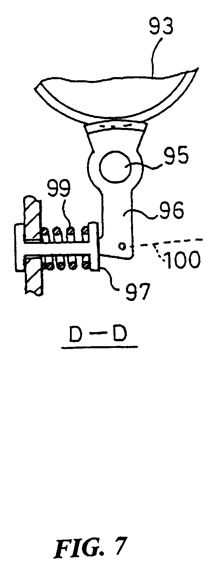

A torque transmission lever 96 engages the sun gear 93 attached to the rotating shaft 74. The torque transmission lever 96 is rotatable about a shaft 95 secured to the vehicle body frame and has a configuration as shown in the section taken along the line D-D in Fig. 7 in which an end of the lever 96 urges a spring 99 through an abutting member 97. An increase in pedaling torque results in an increase in a torque reaction force which acts on the sun gear 93. As a result, the torque transmission lever 96 is rotated to urge and displace the spring 99 which in turn pulls a wire 100 connected to the end of the lever. The wire 100 is connected to a butterfly valve of the carburetor 18 and to increase the amount of the intake gas as the manual pedaling torque increases, thereby increasing assistant torque from the engine. In this case, since the rotating shaft 74 with the sun gear 93 attached thereto is accelerated by the pedal shaft 70, a change in torque can be detected in a low torque state. Therefore, the strength of the spring and the like can be low, and it is possible to employ a simple detection mechanism with sufficiently durability.

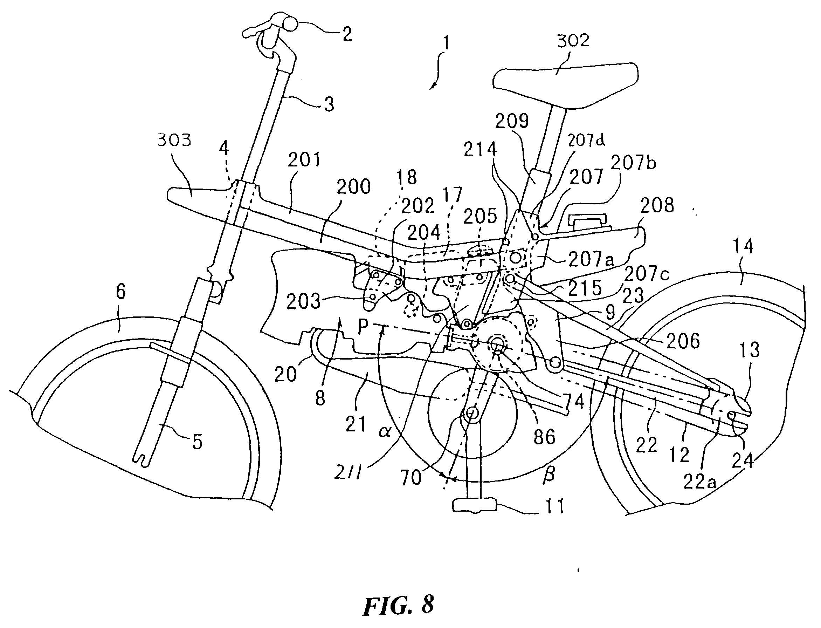

Fig. 8 is a side view of major parts of motive-force-assisted bicycle according to another aspect of the present invention. In the embodiment shown below, like reference numbers are assigned to members identical or corresponding to those in the above-described embodiment and description will be omitted for them.

A motive-force-assisted bicycle 1 in the present embodiment includes a pair of left and right front frames 200 secured to a head pipe 4, and the upper parts of the two left and right front frames 200 are covered by a detachable resin cover 201 which extends astride them. As described later, an assistant drive means or motive force unit (engine unit) 8 is suspended and supported substantially in the middle of the front frames 200 through an engine mount 203 comprising a bracket 202 and an elastic material. A carburetor 18 having a fuel pump and an air cleaner 17 are provided in an upper portion of the engine unit 8 between the left and right front frames 200 in the rear of the engine. An oil tank 205 is provided behind the air cleaner 17 and is mounted to the engine unit 8 using, for example, a separated oiling system, and the oil is supplied to the engine by an oil pump 204 driven by the engine.

A seat tube 209 for supporting a seat 302 is secured between the rear ends of the left and right front frames 200. Left and right side members 207 made of an aluminum casting are fitted and secured to the rear ends of the front frames 200 from left and right sides thereof. The side frames 207 also sandwich and secure the front ends of seat stays 23 that constitute a rear frame of the vehicle body from both sides thereof. The front ends of the seat stays 23 are connected to the front ends of chain stays 22 through brackets 206. A fuel tank 208 is attached in rear parts of the side members 207 such that it is sandwiched by the left and right side members 207. A pair of left and right brackets 211 are secured to rear portions of the front frames 200, and a force transmitting means or synthesizer unit 9 is mounted to the brackets 211 and the above-described brackets 206 (see Fig. 8).

In the above-described configuration, when the vehicle body is viewed laterally, the resultant force shaft is disposed rearwardly of the pedal shaft 70; an angle β defined by a wheel shaft 24 of the rear wheel and the pedal shaft 70 about the axis of the resultant force shaft 86 is an obtuse angle; and an angle α defined by the axis P of the crank shaft (output shaft) of the engine and the pedal shaft 70 is an acute angle.

With such an angular arrangement, since the angle α corresponding to the direction of the crank shaft of the engine is an acute angle, the engine unit 8 is raised in the longitudinal direction thereof by a small degree and the engine is therefore disposed in a low position. This reduces the possibility of the interference of the rider's knees with the engine unit 8 when the pedals are operated to facilitate the pedal operation and improve derivability.

Further, since the above-described angle β is an obtuse angle, the resultant force shaft is located rearwardly of the pedal shaft; the engine is therefore disposed rearwardly; the position of the centroid is close to the center of the vehicle body providing stability; and flexibility in arranging the head pipe and the like is increased to allow an optimum layout to be realized easily.

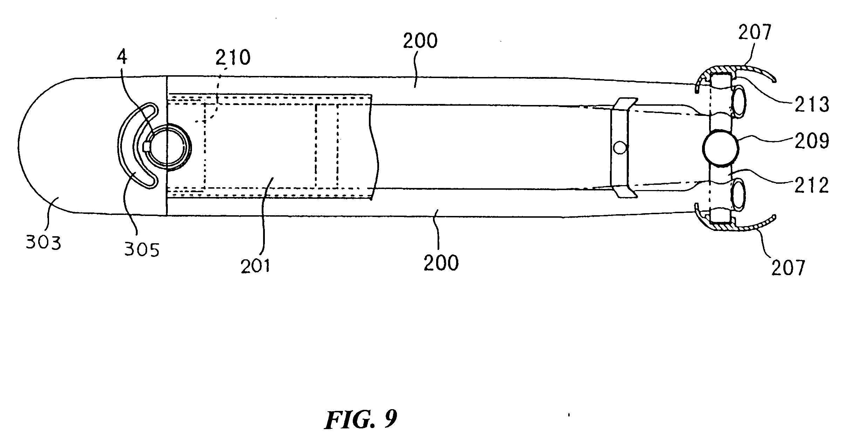

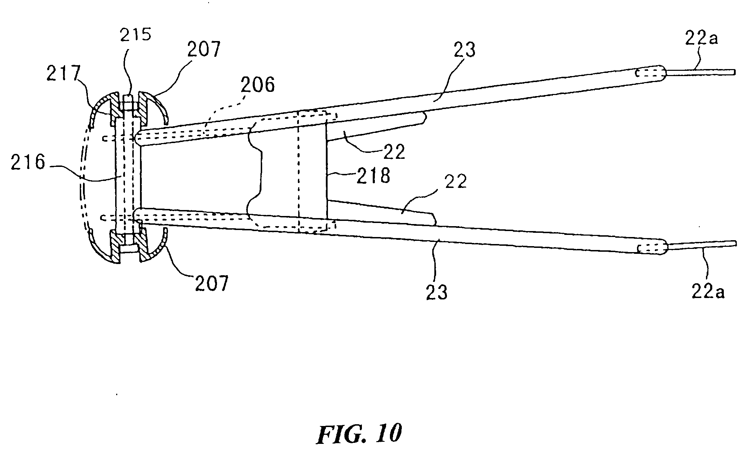

Fig. 9 is a plan view of the front frames 200. As illustrated, the two left and right front frames 200 are joined with brackets 210 secured to the head pipe 4 at the front ends thereof by means of welding or the like. A cover 201 is detachably mounted to the upper surfaces of the left and right frames 200. Further a fender portion 303 having a through hole 305 for wires and the like is secured in front of the front frames 200 and the cover 201 with the head pipe 4 interposed. A seat tube 209 is disposed in the middle of the rear ends of the left and right front frames 200, and support pipes 212 secured to the left and right sides of the seat tube 209 are inserted through and welded to the respective front frames 200. The ends of the support pipes 212 that outwardly protrude from the left and right front frames 200 are fitted into, secured to and held by recesses provided in thick support portions 213 inside the left and right side members 207. The left and right side members 207 are matched with each other above the front frames 200 to such that they sandwich and hold the seat tube 209 from both sides thereof, and the matched surfaces abut each other before and behind the seat tube 209 and are secured to each other with bolts 214 (Fig. 8) in two locations. The left and right side members 207 are further secured to each other with bolts 215 (Figs. 8 and 10) for securing the seat stays 23 by sandwiching them.

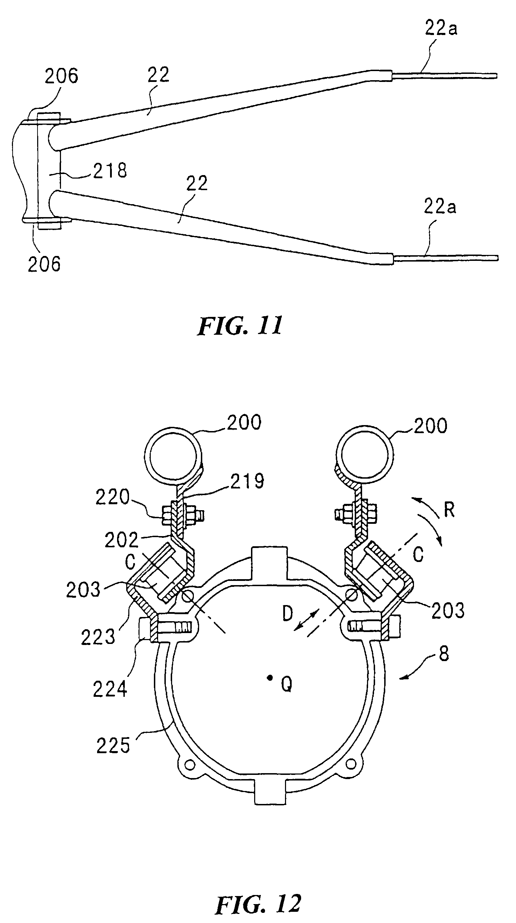

Figs. 10 and 11 are plan views of the seat stays 23 and chain stays 22, respectively, which form a rear frame. As illustrated, the front ends of the left and right seat stays 23 are connected to each other by a cross pipe 216. The left and right ends of the cross pipe 216 are fitted into respective recesses provided on thick support portions 217 inside the side members 207 and are secured and held by a bolt 215 that penetrates therethrough. Brackets 206 are secured to the lower side of the cross pipe 216 at the left and right sides thereof by means of welding or the like. The rear ends of the seat stays 23 are joined with brackets 22a provided on the rear ends of the chain stays 22. The front ends of the left and right chain stays 22 are connected to each other by a cross pipe 218 which is in turn secured to the brackets 206. Thus, the front ends and rear ends of the seat stays 23 and chain stays 22 are connected and secured to each other through the brackets 206 and 22a, respectively.

Fig. 12 is a sectional view showing an engine mounting structure using a principal inertia axis mounting system. A suspension bracket 219 is secured to the lower side of each of the left and right front frames 200 by means of welding or the like. Brackets 202 are secured to the suspension brackets 219 with bolts 220. Mounted to the brackets 202 are support brackets 223 which is secured to a casing 225 of the engine unit 8 with bolts 224 through engine mounts 203 made of an elastic material. The engine mounts 203 at the left and right upper portions are disposed such that their axes C is directed to an principal axis of inertia Q substantially in the center of the engine unit 8. The engine mounts 203 have a structure that exhibits flexibility against a rotation R about the principal axis of inertia Q and exhibits high rigidity against expansion or contraction in the direction of the axes C. Such a mounting structure effectively absorbs vibration in the rotating direction of the engine caused by the rotation of the crank shaft and stably supports the weight of the engine unit 8.

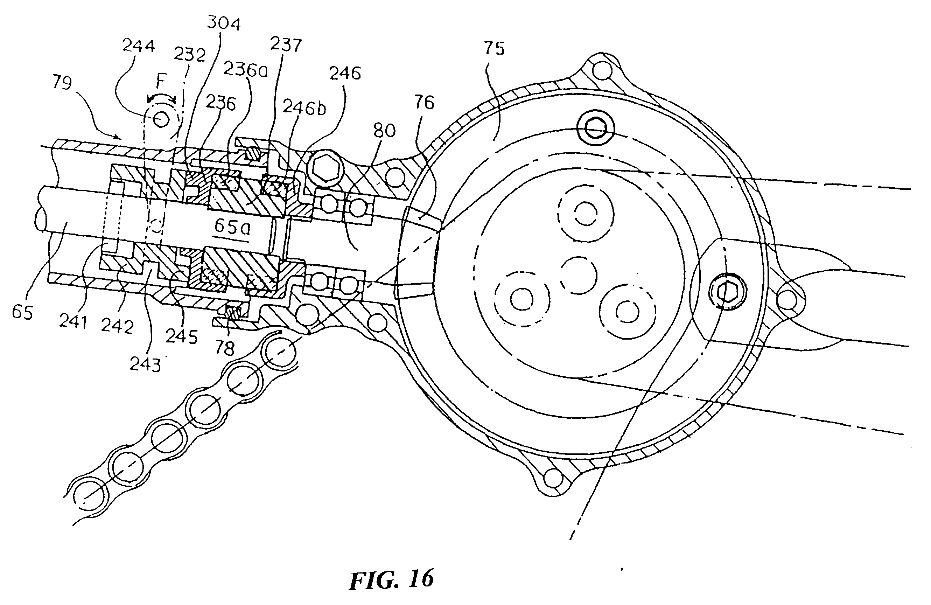

In addition to such an engine mounting structure, according to the present embodiment, the engine unit 8 and the force synthesizer unit 9 are connected through an elastic ring 78 (Figs. 4 and 16) to effectively absorb vibration around the crank shaft, vibration around the engine mounts as described above, and vibration of the engine itself.

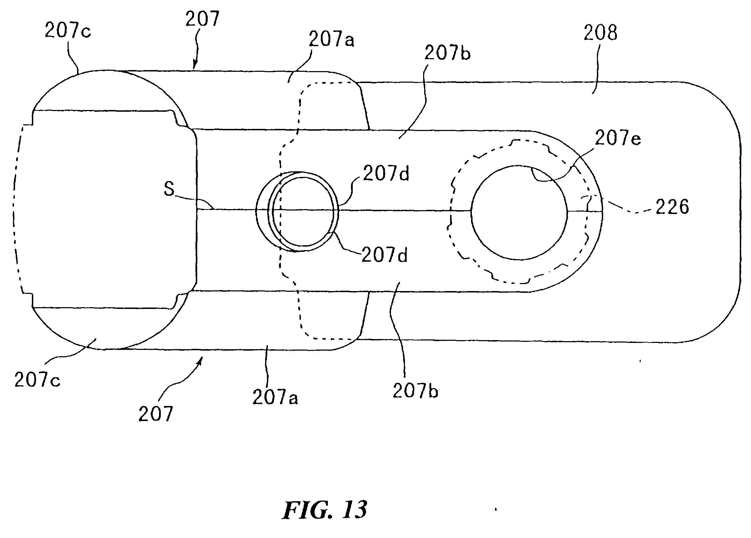

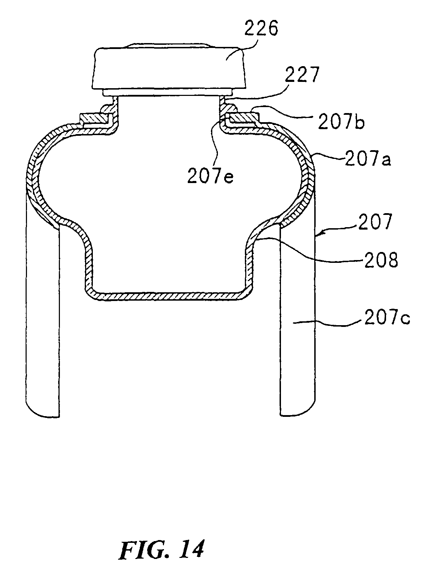

Figs. 13 and 14 are a plan view and a vertical sectional view, respectively, showing a structure holding a fuel tank. As illustrated, each of the left and right side members 207 comprises a bulging portion 207a which bulges outwardly in the form of an arc, a matching portion 207b above the bulging portion 207a, and a side portion 207c (see Fig. 1). A fuel tank 208 is held by inserting and fitting bulging portions on both sides of an upper part thereof into the bulging portions 207a of the left and right side members 207. The matching portions 207b in upper parts of the left and right side members 207 are matched with each other at matching faces S, and there is provided seat tube retaining portions 207d in forward regions of the matching faces S and semi-circular openings 207e in rearward regions thereof. The seat tube retaining portions 207d on both sides are abutted to each other to form a tubular hole as illustrated, and a seat tube 209 is held by clamping it by the circumference of the hole. The semi-circular openings 207e at the rearward region are matched in a face-to-face relationship with each other to form a circular hole, and a filler tube 227 of the fuel tank 208 is held by clamping it by the circumference of the hole. 226 designates a cap for the filler tube 227. Thus, by holding the fuel tank 208 by sandwiching it between the left and right side members 207, as described above, the fuel tank can be held easily and reliably without increasing the number of parts by utilizing the side members 207 for connecting the front frames 200 and the seat stays 23 and chain stays 22 on the rear side to form an integral frame structure. As a result, a light and compact structure can be obtained.

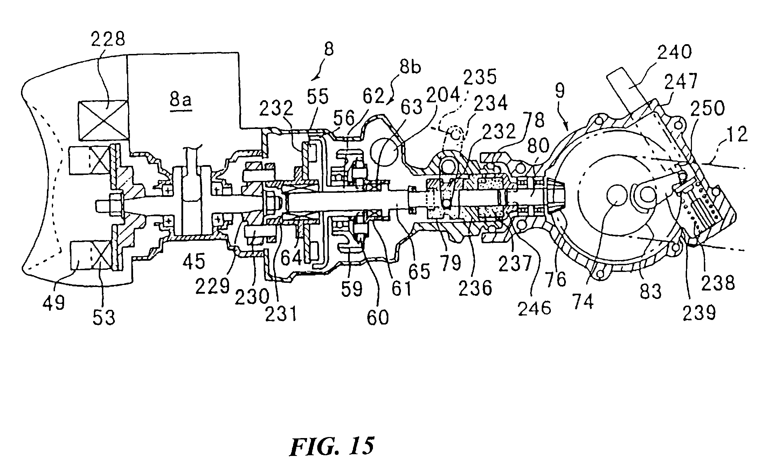

Fig. 15 illustrates an internal configuration of an engine unit portion according to an eighth embodiment of the present invention. An engine which is not shown is contained in an engine portion 8a in a forward portion of an engine unit 8, and a fly-wheel magneto 53 is attached to an end of a crank shaft 45 located forwardly thereof. The fly-wheel magneto 53 includes a air-cooling fan 49. A coil 228 for generating electric power is provided adjacent to the fly-wheel magneto 53. A coupling 229 is secured to the rear end of the crank shaft 45 by means of taper fitting. A bush made of resin (not shown) is attached to the coupling 229, and a pin 230 is inserted in the bush. The pin 230 integrally couples the coupling 229 and a connecting shaft 231 provided on the rear side thereof. A transmission shaft 65 for transmitting the output rotation of the crank shaft 45 is disposed coaxially with the crank shaft 45. As in the above-described embodiment, a one-way clutch 64 is mounted between the end of the transmission shaft 65 and the connecting shaft 231 to transmit the rotation of the transmission shaft 65 to the crank shaft 45 when the engine is started.

A shoe support plate 232' having a shoe 55 is integrally secured to the connecting shaft 231. When the engine speed exceeds a predetermined speed of rotation, as in the above-described embodiment, the shoe 55 expands and into pressurized contact with a drum 56 to rotate the drum 56. The drum 56 is integrally coupled to a sun gear 62 which is rotatably attached to the transmission shaft 65. An outer circumferential surface of a ring gear 59 provided outside the sun gear 62 is engaged with and secured to irregularities (not shown) provided inside the casing of the engine unit 8. A planetary gear 60 is mounted between the ring gear and the sun gear in engagement therewith. The planetary gear 60 is supported by a carrier 61 which is rotatable relative to the sun gear 62. As in the above-described embodiment, the carrier 61 is attached to the transmission shaft 65 through a one-way clutch 63. Thus, the rotation of the crank shaft 45 is transmitted to the transmission shaft 65 through a centrifugal clutch mechanism comprising the shoe 55 and the drum 56 and a deceleration planetary mechanism comprising the ring gear 59, planetary gear 60, carrier 61, sun gear 62 and the like. A worm wheel (not shown) is secured to an outer circumferential surface of the carrier 61 corresponding to the portion containing the one-way clutch 63 to drive the oil pump 204.

A jaw clutch 79 is provided on the rear end of the transmission shaft 65 of the engine to connect and disconnect the transmission shaft 80 of the force synthesizer unit 9. The jaw clutch 79 is turned on and off by manually operating a wire 235 to rotate a lever 234 to thereby rotate a drive lever 232 as described later.

Fig. 16 is a detailed view of the jaw clutch portion of the above-described embodiment. A slider 242 is integrally secured in the circumferential direction such that it can be slid in the axial direction through a pin 241 planted at the rear end of the transmission shaft 65 of the engine. The slider 242 is formed with a groove 243 in which an end of the drive lever 232 is inserted. The drive lever 232 can be rotated about an axis 244 thereof as indicated by the arrow F, and the rotation causes the slider 242 to be slid in the axial direction of the transmission shaft 65. A claw 245 is provided on the rear side of the slider 242 and, in response to the sliding operation of the slider 242, the claw 245 is engaged with or disengaged from a claw 304 on a clutch member 236 pivoted by the transmission shaft 65 such that it can rotated with some clearance thereto (the figure shows the engaged state). The clutch 236 is engaged with an elastic member 237 provided rearwardly thereof to be integrally coupled thereto at an engaging portion 236a provided at the circumference about the axis thereof. Similarly, the elastic member 237 is integrally coupled to a connecting member 246 integrally coupled to the transmission shaft 80 of the force synthesizer unit by a serration at an engaging portion 246b provided on the rear end thereof. The clutch member 236 and the elastic member 237 are rotatably attached to the rear end 65a of the transmission shaft 65.

In such a structure, in the clutch-on state as illustrated, the slider 242 moves to the right, so that the claw 245 thereof is engaged with the claw 304 of the clutch member 236. Therefore, the rotation of the transmission shaft 65 of the engine unit 8 is transmitted to the force synthesizer unit 9 through the slider 242, clutch member 236, engaging portion 236a, elastic member 237, engaging portion 246b, connecting member 246, and transmission shaft 80 in the order listed.

When the slider 242 is slid to the left by operating the drive lever 232, the claw 245 of the slider 242 is disengaged from the clutch member 236, resulting in a clutch-off state. In this state, the rotation of the transmission shaft 65 is not transmitted to the clutch member 236, and the rear end 65a of the transmission shaft 65 idles in the elastic member 237.

The elastic member 237 interposed between the clutch member 236 and the connecting member 246 cooperates with the elastic ring 78 to absorb the vibration of the engine more effectively.

As shown in the above-mentioned Fig. 15, a bevel gear 76 is provided on the rear end of the transmission shaft 80 of the force synthesizer unit 9 to decelerate a motive force from the engine and transmit it to the bevel ring gear 75 in the force synthesizer unit 9 (Figs. 4 and 6), thereby synthesizing it with a pedaling force from the pedaling shaft. As described above, the force synthesizer unit 9 includes a planetary acceleration mechanism and an assistant motive force output control means which controls the opening of the throttle of the carburetor by detecting the pedaling force by urging a spring in accordance with a torque reaction force acting on a sun gear thereof (see Fig. 7). In the example shown in Fig. 15, an actuator 239 (corresponding to the lever 96 in Fig. 7) in engagement with a sun gear (not shown) urges a spring 238 in accordance with torque, thereby controlling the opening of a butterfly valve of a carburetor through a control and operation means such as a wire (not shown) in accordance with the amount of rotation. In this example, there is further provided a damper 240 for moderating the returning speed of the actuator 239 as described later.

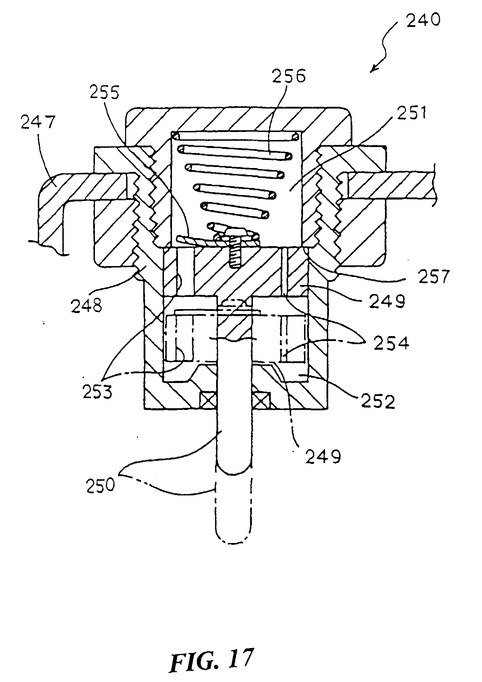

Fig. 17 shows an example of the configuration of the damper 240 in the above-described embodiment. In this example, there is provided a cylinder tube 248 mounted on a housing 247 of the force synthesizer unit 9; a piston 249 is fitted into the cylinder tube 248 such that it slides in the axial direction thereof; and a piston rod 250 connected to the piston 249 protrudes from the cylinder tube 248. The cylinder tube 248 is filled with oil and is divided into two chambers 251 and 252 by the piston 249. The piston 249 is formed with a hole 253 having a larger diameter 253 and a hole 254 having a smaller diameter. A spring 256 is provided in the chamber 251 for urging the piston 249 to cause the piston rod 250 to protrude. A reed valve 255 is mounted on the piston 249 to close the larger diameter hole 253 from the side of the chamber 251 in which the spring 256 is provided. As shown in Fig. 15, the damper 240 is disposed such that it faces the spring 238 with the actuator 239 abutting the piston rod 250 interposed therebetween.

In such a configuration, when the actuator 239 along with the sun gear rotates in the direction of urging the spring 238, the spring 256 urges the piston 249 causing oil to flow through the larger diameter 253 into the chamber 251 by opening the reed valve 255 by force, the piston rod 250 smoothly following up the actuator. Thus, when higher torque is required as a result of an increase in the pedaling force, the throttle is quickly opened in cooperation of the actuator to increase the output of the engine.

Meanwhile, when the actuator is returned as a result of a decrease in the pedaling force, the piston 249 is urged back by the spring 238 through the piston rod 250 of the damper 240. At this time, the larger diameter hole 253 is closed by the reed valve 255, and the oil is communicated only through the smaller diameter hole 254. Therefore, the operation of the piston becomes slow, and the returning speed of the actuator 239 is reduced. As a result, when the assistant motive force is reduced in response to a decrease in the pedaling force, the throttle is closed slowly instead of being immediately closed in response to the decrease in the torque. The piston 249 shown by the solid line in Fig. 17 indicates a state in which the piston rod 250 has been retracted to the extremity where it abuts a stopper.

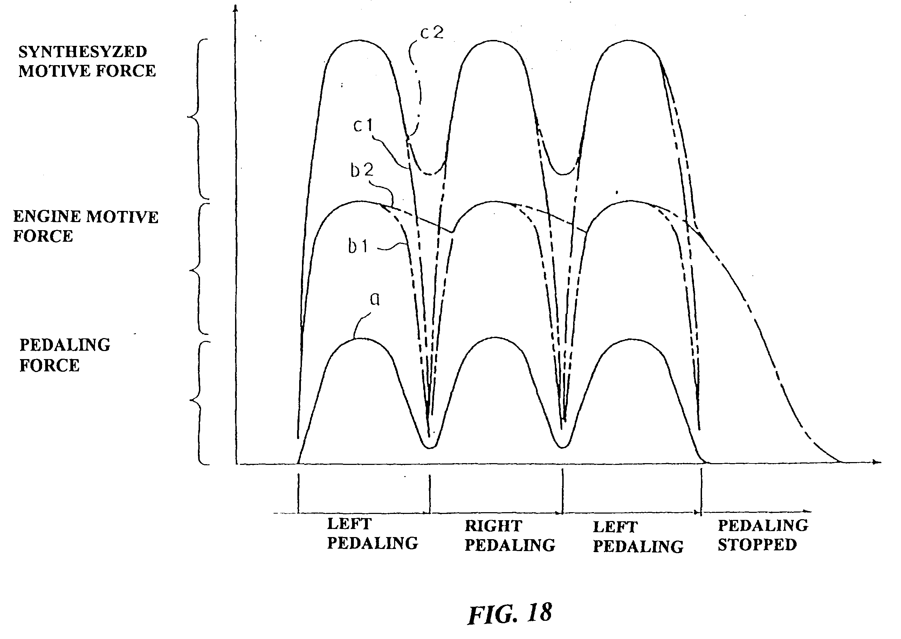

Fig. 18 is a graph illustrating the operation and effect of the damper for moderating the returning operation of the actuator as described above. In the figure, when the bicycle travels, a pedaling force is provided by alternately and repeatedly kicking the left and right pedals, and the actuator rotates in proportion to the pedaling force to increase and decrease the opening of the throttle valve, thereby obtaining an assistant motive force from the engine.

In this case, the left and right pedals are alternately kicked, and the pedaling force applied to the pedal shaft repeatedly increase and decrease as indicated by the curve a. If no damper is provided, when the pedaling force decreases, the throttle opening immediately decreases in proportion thereto. As indicated by the curve b1, the motive force from the engine rapidly decreases and the synthesized motive force also rapidly decreases accordingly as indicated by the curve c1. This results in great fluctuation in the cycle at which the assistant motive force is applied during a travel of the bicycle and therefore the traveling becomes jerky and unstable.

On the other hand, if the damper is used, the speed at which the opening of the throttle valve is decreased is suppressed by the action of the damper when the pedaling force decreases. As a result, the reduction in the motive force from the engine is suppressed as indicated by the graph b2. Therefore, as indicated by the graph b2, the reduction in the synthesized motive force is suppressed. This results in less fluctuation in the cycle at which the assistant motive force is applied, allowing driving with a sense of stability and giving a better ride.

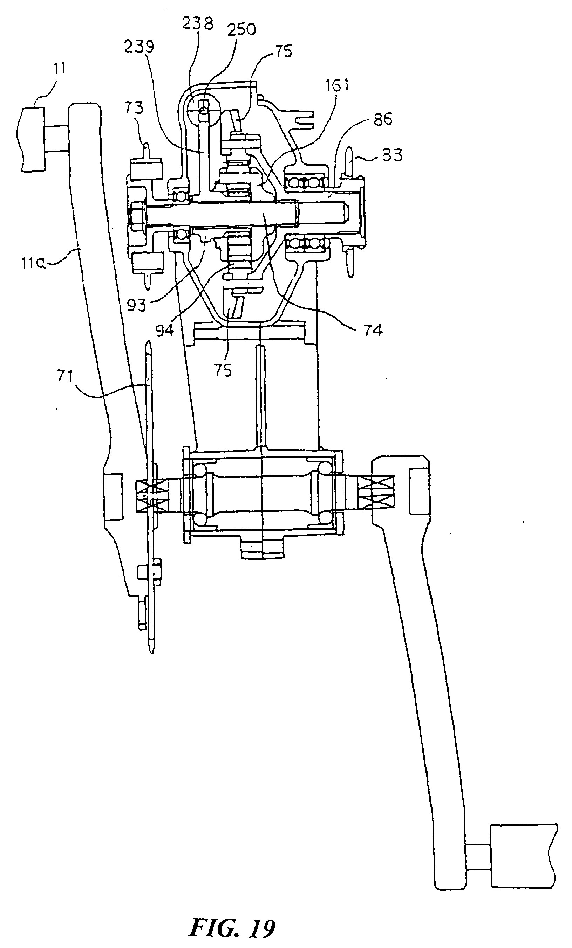

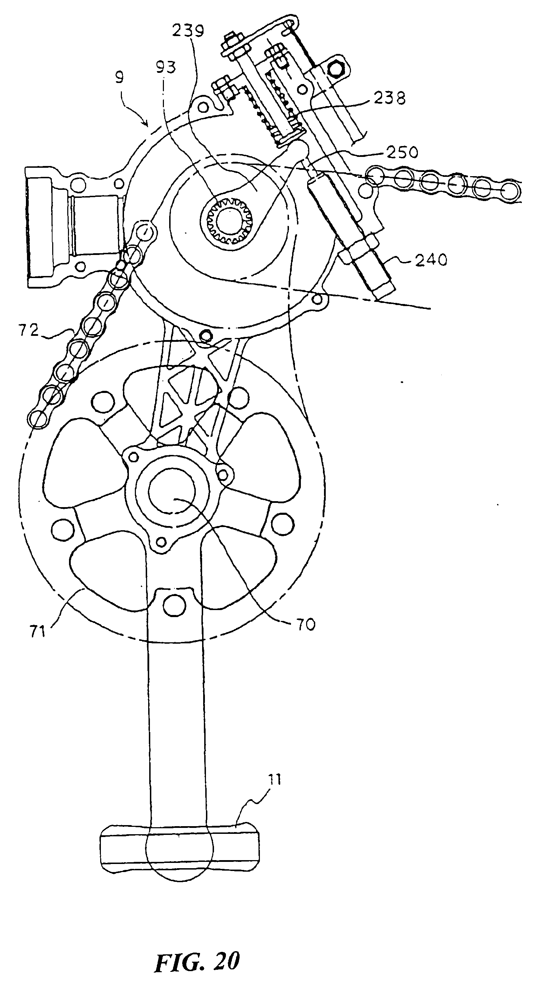

Figs. 19 and 20 are a sectional view and a side view, respectively, of another embodiment of the present invention. The present invention is an improvement on the above-described means for controlling the output of an assistant motive force. In this example, the spring 238 and the piston rod 250 of the damper 240 which receive the torque of a pedaling force from the actuator are arranged in a face-to-face relationship along a straight line, and the actuator 239 is formed integrally with the sun gear 93. By making the actuator 239 integral with the sun gear 93, the number of parts is reduced and the structure is simplified to facilitate the assembly operations and maintenance. Further, when compared to an arrangement wherein torque is transmitted from the sun gear through gears and the like, this arrangement allows a simpler structure and eliminates delays in response due to backlash and the like to improve follow-up characteristics and reliability in operation. The configuration, operation and effect of the present embodiment are otherwise similar to those in the above-described embodiments.

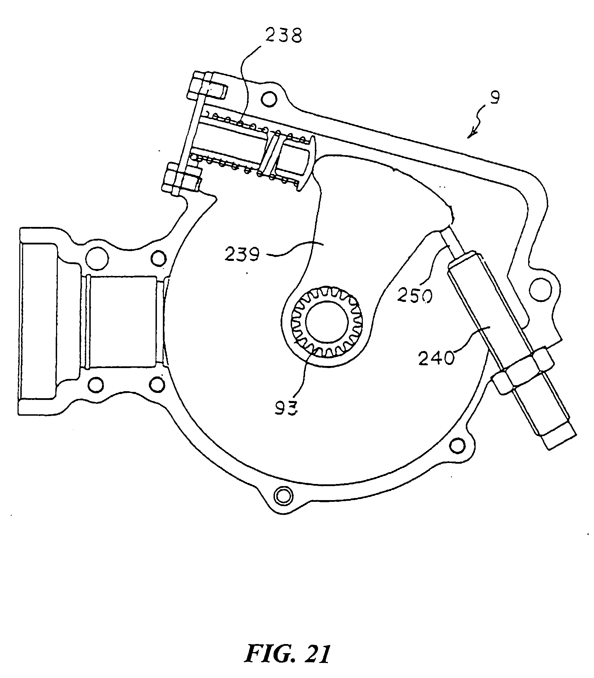

Fig. 21 is a side view of a further embodiment of the present invention. In this embodiment, the spring 238 and the piston rod 250 of the damper 240 which receive the torque of a pedaling force from the actuator 239 integral with the sun gear 93 are arranged in a face-to-face relationship at an inclination from each other. The angle of the inclination is preferably close to the direction of a tangential line of a circle whose center is the axis of the sun gear and whose radius is defined by the abutting position of the actuator. Such an arrangement allows the action of the spring and the damper on the rotating actuator to be effectively exerted on the actuator, thereby improving the torque variation follow-up characteristics further. The configuration, operation and effect of the present embodiment are otherwise similar to those in the above-described embodiments.

Such structures in which an actuator is formed integrally with a sun gear forming a part of a force synthesizing mechanism are not limited to structures in which a resultant force shaft and a pedal shaft are separated, and the present invention may be applied to structures of a force synthesizer unit in which a resultant force shaft and a pedal shaft are provided coaxially.

Since the present invention employs a configuration in which a resultant force shaft is provided separately from a pedal shaft as described above, it is possible to sequentially decelerate rotation from an engine at an appropriate reduction ratio to efficiently synthesize it with accelerated rotation from a pedal shaft on a resultant force shaft without extremely decelerating the rotation from the engine to match it with manual rotation, and to transmit the resultant rotation to a rear wheel smoothly.
Further, since the resultant force shaft is provided in a position higher than the pedal shaft and the wheel shaft of the rear wheel, a system for transmitting a motive force from the resultant force shaft to the wheel shaft can be located in a higher position. For example, when the resultant force shaft is provided rearwardly of the pedal shaft, a mountain-like configuration is formed by the pedal shaft, resultant force shaft and the wheel shaft, and this increases road clearance between the pedal shaft and rear wheel to allow smooth running even on a rough road and the like. If chain stays that connect the resultant force shaft and the wheel shaft is provided, the height of the chain stays increases toward the front portion thereof, resulting in an increase in the road clearance at the area of the chain stays.

In addition, the assistant motive force device may be provided ahead of the resultant force shaft so that the resultant force shaft and the assistance motive force device are arranged in parallel above the pedal shaft to provide a well-balanced layout and a compact support structure.

Further, if an engine is employed as an assistant motive force and the crank shaft thereof is arranged in a plane including the longitudinal direction of the vehicle body, since the crank shaft does not protrude in the direction of the width of the vehicle, a slim vehicle body structure is achieved and the frame structure is simplified. Furthermore, by supporting the engine on said vehicle body frame in a substantially suspended state, it is possible to reduce the dimension of the supporting portion in the direction of the width of the vehicle body and to arrange the frame in a higher position to increase the road clearance.

Moreover, since the center of inertia of the assistant motive force device is placed lower than the suspending position by suspending the engine (assistant motive force device) in a position higher than a twisting axis M of the vehicle body (a line connecting the lower end of the head pipe 4 and the pedal shaft 70). Thus, the center of inertia can be closer to the above-described twisting axis M. Therefore, the moment of the assistant motive force device about the twisting axis M can be reduced to improve the stability in traveling, especially in accelerated traveling and when the pedals are strongly kicked. In this case, if an elastic member such as a rubber mount is interposed at the suspend-support, the vibration of the engine is suppressed more effectively.

## Claims

1. A motive-force assisted bicycle (1) comprising a pedal shaft (70) rotatable by a pedaling force from pedals (11), an assistant drive means (8) supported on a body frame (7), a force transmitting device (9) for combining and transmitting a force from said pedal shaft (70) with a force from said assistant drive means (8) to drive a resultant force shaft (86) which drives a wheel (14) via a transmission means (12), **characterized in that** said force transmitting device (9) and said resultant force shaft (86) are provided at positions different to that of said pedal shaft (70).

2. A motive-force assisted bicycle (1) comprising a pedal shaft (70) rotatable by a pedaling force from pedals (11), an assistant drive means (8) supported on a body frame (7), a force transmitting device (9) for combining and transmitting a force from said pedal shaft (70) with a force from said assistant drive means (8) to drive a resultant force shaft (86) which drives a wheel (14) via a transmission means (12), said pedal shaft (70) and said resultant force shaft (86) being concentrically arranged, **characterized in that** said force transmitting device (9) includes a planetary acceleration mechanism provided between a manually rotated shaft (74) and the resultant force shaft (86), the planetary acceleration mechanism comprises an outer wheel (75) connected to said resultant force shaft (86), a sun wheel (93) rotatably attached to said manually rotated shaft (74), a carrier (161) secured to said manually rotated shaft (74), and a planetary wheel (94) rotatably attached to said carrier (161) in engagement with said outer wheel (75) and sun wheel (93), the sun wheel (93) is configured such that it can rotate against a spring (99,238) in response to a torque reaction force which acts on said sun wheel (93), there is provided an output control means (96,236) for controlling the output of said assistant drive means (8) in accordance with the rotation of the sun wheel (93), the output control means includes an actuator (96,236) for urging said spring (99,238) in response to the rotation of said sun wheel (93) to transmit the rotational force to the spring (99,238), there is provided a damper (240) in a position facing said spring (99,238) for damping the speed at which said actuator (96,236) returns, said actuator (96,236) is formed integrally with said sun wheel (93), and that there is provided an internal combustion engine (40) or electric motor, an output shaft (65) thereof being positioned in a plane including a longitudinal direction of the vehicle body.

3. A motive-force assisted bicycle according to claim 1, **characterized in that** with respect to a ground (H) the bicycle (1) drives on the resultant force shaft (86) is provided at a higher position than said pedal shaft (70) and a wheel shaft (24) of said driven wheel (14).

4. A motive-force assisted bicycle according to claim 1 or 3, **characterized in that** said assistant drive means (8) being supported on said body frame (7) ahead of said resultant force shaft (86) as seen in normal driving direction of said bicycle (1).

5. A motive-force assisted bicycle according to at least one of the preceding claims 1, 3 or 4, **characterized in that** an output shaft (65) of said assistant drive means (8) being positioned in a plane including the longitudinal direction of the bicycle body.

6. A motive-force assisted bicycle according to at least one of the preceding claims 1, 3 to 5, **characterized in that** said assistant drive means (8) is supported on said body frame (7) in a substantially suspended state and in that the supporting position is above a line (M) connecting a lower end of a head pipe (4) and the pedal shaft (70) when the vehicle body is viewed laterally.

7. A motive-force assisted bicycle according to claim 6, **characterized in that** an elastic material (28) is interposed in the position where said assistant drive means (8) is supported.

8. A motive-force assisted bicycle according to at least one of the preceding claims 1, 3 to 6, **characterized in that** said force transmitting device (9) includes a manually rotated shaft (74) interposed between said pedal shaft (70) and said resultant force shaft (86), and a first acceleration means (71,72,73) provided between said pedal shaft (70) and said manually rotated shaft (74) for accelerating and the rotation of said pedal shaft (70) transmitting it to the manually rotated shaft (74), and in that a second acceleration means (75) is provided between said manually rotated shaft (74) and said resultant force shaft (86) for further accelerating the rotation of the manually rotated shaft (74) and transmitting it to said resultant force shaft (86).

9. A motor-force assisted bicycle according to at least one of the preceding claims 5 to 8, **characterized in that** a first angle defined by the pedal shaft (70) and the wheel shaft (24) about the resultant force shaft (86) is an obtuse angle (β) and a second angle defined by the pedal shaft (70) and the output shaft (65) of the assistant drive motor (8) about the resultant force shaft (86) is an acute angle (α) when the vehicle body is viewed laterally.

10. A motor-force assisted bicycle according to at least one of the preceding claims 1, 3 to 9, **characterized by** side members (207) which sandwich a seat tube (209) and vehicle front frames (200) before and behind the same from both left and right sides thereof, and by a fuel tank (208) or a battery case, respectively, being sandwiched and held between said side members (207).

11. A motor-force assisted bicycle according to at least one of the preceding claims 1, 3 to 10, **characterized in that** said force transmitting device (9) includes a planetary acceleration mechanism provided between the manually rotated shaft (74) and the resultant force shaft (86);
the planetary acceleration mechanism comprises an outer wheel (75) connected to said resultant force shaft (86), a sun wheel (93) rotatably attached to said manually rotated shaft (74), a carrier (161) secured to said manually rotated shaft (74), and a planetary wheel (94) rotatably attached to said carrier (161) in engagement with said outer wheel (75) and sun wheel (93).

12. A motor-force assisted bicycle according to claim 11, **characterized in that** the sun wheel (93) is configured such that it can rotate against a spring (99,238) in response to a torque reaction force which acts on said sun wheel (93), and that there is provided an output control means (96,236) for controlling the output of said assistant drive means (8) in accordance with the rotation of the sun wheel (93).

13. A motor-force assisted bicycle according to claim 12, **characterized in that** the output control means includes an actuator (96,236) for urging said spring (99,238) in response to the rotation of said sun wheel (93) to transmit the rotational force to the spring (99,238), and that said actuator (96,236) is integrally formed with said sun wheel (93).

14. A motor-force assisted bicycle according to claim 13, **characterized in that** there is provided a damper (240) in a position facing said spring (99,238) for damping the speed at which said actuator (96,236) returns.

15. A motor-force assisted bicycle according to claim 14, **characterized in that** said damper (240) comprising a cylinder tube (248) mounted on a housing (247) of the force transmission means (9), a piston (249) slidably received within said cylinder tube (248), a piston rod (250) connected to said piston (249) protruding from said cylinder tube (248) and being associated with said spring (99,238) being urged by said sun wheel (93), and another spring (256) within said cylinder tube (248) abutting said piston (249) on its rod free side.

16. A motor-force assisted bicycle according to claim 15, **characterized in that** said damper (240) being positioned such that said spring (238) and said piston rod (250) are arranged in a face-to-face relationship along a straight line and that said actuator (236) being fixed to said sun gear (93).

17. A motor-force assisted bicycle according to claim 15, **characterized in that** said damper (240) being positioned such that said spring (238) and said piston rod (250) are arranged in a face-to-face relationship at an inclination from each other and that said actuator (236) being fixed to said sun gear (93).

18. A motor-force assisted bicycle according to at least one of the preceding claims 1, 3 to 17, **characterized in that** said assistant drive means (8) comprising an internal combustion engine (40) or an electric motor.
